# EUROPEAN PATENT APPLICATION

(11) **EP 4 835 202 A1**
(43) Date of publication of application: **04.11.2026**
(21) Application number: 24912947.9
(22) Date of filing: 25.12.2024
(51) Int. Cl.: E02F 9/00, B60L 53/14, E02F 9/24

(54) **WORK MACHINE**

(30) Priority: 27.12.2023 JP 2023221810
(71) Applicant: Hitachi Construction Machinery Co., Ltd., Tokyo 110-0015 (JP)
(72) Inventor: MAKIMURA, Yuki, Tsuchiura-shi, Ibaraki 300-0013 (JP); TAKEUCHI, Ken, Tsuchiura-shi, Ibaraki 300-0013 (JP)
(74) Representative: MERH-IP Matias Erny Reichl Hoffmann Patentanwälte PartG mbB
(86) International application number: PCT/JP2024/046020
(87) International publication number: WO 2025/143061

(57) **Abstract**

A work machine includes a lower traveling body, an upper turning body provided to be capable of turning relative to the lower traveling body by a turning mechanism, a work device mounted on the upper turning body, an electric motor device configured to generate driving energy for operating the lower traveling body, the turning mechanism, and the work device respectively using electric power, a power feeding port to/from which a power cable coupled to an external power source is attachable and detachable, an electrical power storage device that is rechargeable by using the electric power supplied from the external power source via the power cable coupled to the power feeding port and is capable of discharging the electric power for use in generating the driving energy. A controller limits the operation of at least one of the lower traveling body, the turning mechanism, and the work device when loss of coupling of the power cable is detected after coupling of the power cable to the power feeding port is detected by a coupling detection device.

## Description

### Technical Field

The present invention relates to a work machine.

### Background Art

Recently, as a work machine which does not emit greenhouse gases to combat global warming, an electric work machine has been known that drives a hydraulic pump with an electric motor to supply pressure oil to an actuator for operation of the actuator. In such an electric work machine, an external power source may be used as one of power supply sources to an inverter which controls an electric motor. Specifically, by coupling an external power source installed at a predetermined location and an electric work machine via a cable and operating an inverter using electric power supplied from the external power source, an electric motor can be driven to operate the work machine.

When a work machine operates an actuator in a state of being coupled to an external power source via a cable as described above, for example, the cable may be forcibly pulled by a turning operation of the work machine or the traveling work machine may step on the cable or the like, and the cable may receive excessive physical loads depending on the operation contents. This may lead to a damage to the cable and therefore need to be suppressed as much as possible.

To address the problem described above, for example, a technique in Patent Literature 1 is known. Patent Literature 1 describes a work machine that includes a detection means configured to detect that a power cable is coupled to a connector and a control means configured to inhibit or limit an operation of at least one of electric drive means when it is detected by the detection means that the power cable is coupled to the connector, and limits a traveling speed to a low speed or a very low speed even while enabling traveling of a lower traveling body when it is detected by the detection means that the power cable is coupled to the connector.

### Citation List

### Patent Literature

Patent Literature 1: Japanese Patent No. 5004834

### Summary of Invention

### Technical Problem

In the work machine described in Patent Literature 1, the traveling speed is limited to a low speed or a very low speed when the power cable is coupled to the connector of a vehicle body, however, even under such traveling speed limitation, the power cable may be detached out of the connector according to an operation of the work machine. In such a case, if the work machine can continue the operation using power of a battery inside or the like even in the state where the power cable is disconnected, there is still a risk of the operation of the work machine causing a damage to the power cable. However, since the operation when the power cable is detached is not taken into consideration in Patent Literature 1, a damage to the power cable cannot be sufficiently suppressed in such a situation.

An object of the present invention, which has been made in consideration of the above, is to provide a work machine capable of suppressing a damage to a cable even when the cable that supplies electric power from a power source device to the work machine is detached from the work machine.

### Solution to Problem

A work machine according to the present invention includes: a lower traveling body; an upper turning body coupled to the lower traveling body via a turning mechanism and provided to be capable of turning relative to the lower traveling body by the turning mechanism; a work device mounted on the upper turning body; an electric motor device configured to generate driving energy for operating the lower traveling body, the turning mechanism, and the work device respectively using electric power; a power feeding port to/from which a power cable coupled to an external power source is attachable and detachable; an electrical power storage device that is rechargeable by using the electric power supplied from the external power source via the power cable coupled to the power feeding port and is capable of discharging the electric power for use in generating the driving energy; and a controller configured to control operations of the lower traveling body, the turning mechanism, and the work device, the work machine further including a coupling detection device configured to detect a coupling state of the power cable to the power feeding port, wherein the controller limits the operation of at least one of the lower traveling body, the turning mechanism, and the work device when loss of coupling of the power cable is detected after coupling of the power cable to the power feeding port is detected by the coupling detection device.

### Advantageous Effect of Invention

According to the present invention, even when a cable that supplies electric power from a power source device to a work machine is detached from the work machine, a damage to the cable can be sufficiently suppressed.

Note that further features associated with the present invention will be apparent from the present description and attached drawings. In addition, problems, configurations and effects other than those described above will be apparent from the description of embodiments below.

### Brief Description of Drawings

[Figure 1] Figure 1 is an outside drawing of an electric hydraulic shovel which is an example of a work machine according to one embodiment of the present invention.
[Figure 2] Figure 2 is a configuration diagram of a control system of the work machine according to a first embodiment of the present invention.
[Figure 3] Figure 3 is a diagram illustrating a control flow of operation limiting processing.
[Figure 4] Figure 4 is a configuration diagram of the control system of the work machine according to a second embodiment of the present invention.
[Figure 5] Figure 5 is a configuration diagram of the control system of the work machine according to a third embodiment of the present invention.

### Description of Embodiments

Hereinafter, the embodiments of a work machine according to the present invention will be described in detail with reference to attached drawings, with a hydraulic shovel as an example.

### (First Embodiment)

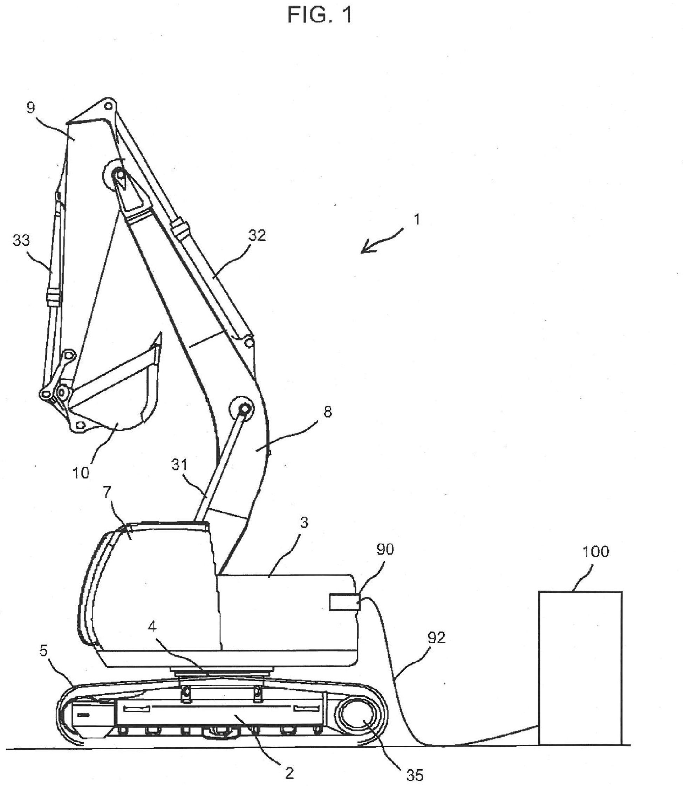

Figure 1 is an outside drawing of an electric hydraulic shovel which is an example of the work machine according to one embodiment of the present invention. The electric hydraulic shovel 1 includes a lower traveling body 2 provided with a pair of right and left crawlers 5, an upper turning body 3 provided on the lower traveling body 2 and coupled to the lower traveling body 2 via a turning mechanism 4, a boom 8 freely rotatably connected to one end of the upper turning body 3, an arm 9 freely rotatably connected to one end of the boom 8, and a bucket 10 freely rotatably connected to one end of the arm 9.

In the lower traveling body 2, a traveling motor 35 that drives the crawlers 5 to rotate is provided for each of right and left crawlers 5 of the pair. The lower traveling body 2 can drive each of the right and left crawlers 5 to rotate in either forward or reverse direction by the traveling motor 35 to achieve a traveling operation which is one of forward traveling, reverse traveling and turning direction.

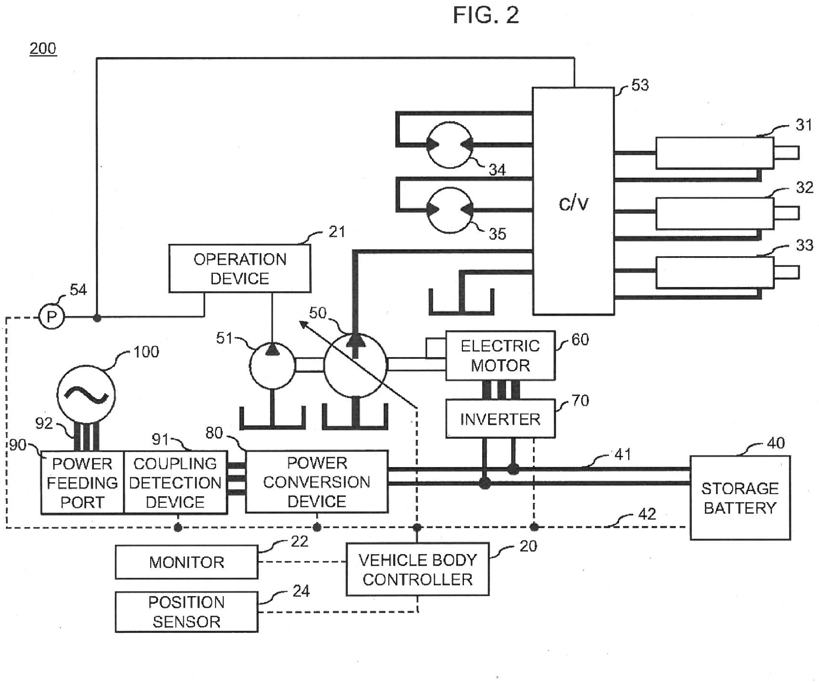

The upper turning body 3 is provided with a cab 7 where an operator rides in order to maneuver the hydraulic shovel 1. The turning mechanism 4 that connects the lower traveling body 2 and the upper turning body 3 is provided with a turning motor 34 (see Figure 2), and by driving the turning motor 34, the upper turning body 3 can be turned at an arbitrary angle relative to the lower traveling body 2 by the turning mechanism 4.

In the hydraulic shovel 1, the boom 8, the arm 9, and the bucket 10 mounted on the upper turning body 3 form a work device that performs work such as excavation. The boom 8 and the upper turning body 3 are connected via a boom cylinder 31. The arm 9 and the boom 8 are connected via an arm cylinder 32. The bucket 10 and the arm 9 are coupled via a bucket cylinder 33. In the hydraulic shovel 1, by supplying a hydraulic pressure to the boom cylinder 31, the arm cylinder 32, and the bucket cylinder 33 respectively and expanding and contracting these cylinders, the boom 8, the arm 9, and the bucket 10 can be operated respectively to perform the work such as excavation.

The upper turning body 3 is provided with a power feeding port 90. The power feeding port 90 has a structure to/from which a power cable 92 coupled to an external power source 100 installed near the hydraulic shovel 1 is attachable and detachable. The hydraulic shovel 1 can receive power supply from the external power source 100 via the power cable 92 coupled to the power feeding port 90. The power supplied from the external power source 100 is charged to a storage battery 40 (see Figure 2) incorporated in the hydraulic shovel 1, and is used to generate the hydraulic pressure for operating the turning motor 34, the traveling motor 35, and the cylinders (the boom cylinder 31, the arm cylinder 32, and the bucket cylinder 33) of the work device, respectively.

Figure 2 is a configuration diagram of a control system of the work machine according to the first embodiment of the present invention. A control system 200 illustrated in Figure 2 is a system that controls an operation of the hydraulic shovel 1 illustrated in Figure 1, and includes the turning motor 34 and the traveling motor 35 that are hydraulic motors, the boom cylinder 31, the arm cylinder 32, and the bucket cylinder 33 that are hydraulic cylinders, and a hydraulic pump 50, a pilot pump 51, and a control valve unit 53 that generate and adjust the hydraulic pressure to be supplied to these actuators respectively.

The hydraulic pump 50 and the pilot pump 51 are mechanically coupled to an electric motor 60. The electric motor 60 is driven to rotate using AC power supplied from an inverter 70 to drive the hydraulic pump 50 and the pilot pump 51 and to cause the hydraulic pump 50 and the pilot pump 51 to generate the hydraulic pressure respectively. The hydraulic pressure generated by the hydraulic pump 50 is output to the control valve unit 53 and the hydraulic pressure generated by the pilot pump 51 is output to the control valve unit 53 via an operation device 21.

The operation device 21 provided in the cab 7 is disposed between the pilot pump 51 and the control valve unit 53 on a hydraulic circuit. When the operator performs a lever operation to the operation device 21 inside the cab 7, in response to the lever operation, the hydraulic pressure is output from the pilot pump 51 to the control valve unit 53, and an opening from the hydraulic pump 50 to each actuator is adjusted in the control valve unit 53. Thus, the hydraulic pressure generated by the hydraulic pump 50 is supplied to each actuator in response to the lever operation of the operation device 21 and each actuator is operated.

In the control system 200, as described above, by driving the hydraulic pump 50 and the pilot pump 51 by rotational driving force of the electric motor 60 using the electric power, the hydraulic pressure is supplied to the traveling motor 35, the turning motor 34, the boom cylinder 31, the arm cylinder 32, and the bucket cylinder 33 respectively, and the lower traveling body 2, the turning mechanism 4, and the work device (the boom 8, the arm 9, and the bucket 10) can be operated respectively. That is, the electric motor 60 can generate the hydraulic pressure to be supplied from the hydraulic pump 50 and the pilot pump 51 to these actuators as driving energy for operating the lower traveling body 2, the turning mechanism 4, and the work device respectively by being driven to rotate using the electric power.

To the electric motor 60, the inverter 70 is coupled. The inverter 70 converts DC power supplied from a power conversion device 80 and the storage battery 40 to AC power, and supplies it to the electric motor 60 to drive the electric motor 60 to rotate. The power conversion device 80 is coupled to the external power source 100 via the power feeding port 90 and the power cable 92, converts the AC power supplied from the external power source 100 to the DC power, and outputs it to the inverter 70 and the storage battery 40. The storage battery 40 charges the DC power output from the power conversion device 80, and supplies the charged electric power to the inverter 70 as needed. The power conversion device 80, the inverter 70, and the storage battery 40 are coupled to each other via a power line 41.

In addition, the control system 200 illustrated in Figure 2 includes a vehicle body controller 20, a monitor 22, and a position sensor 24. The vehicle body controller 20 is coupled to the power conversion device 80, the inverter 70, the storage battery 40, and the hydraulic pump 50 via a signal line 42, and controls them by outputting a predetermined control signal through the signal line 42. For example, the hydraulic pressure output from the pilot pump 51 to the control valve unit 53 is detected by a pressure sensor 54 and a signal according to the detection result is transmitted to the vehicle body controller 20. In addition, a current position of the hydraulic shovel 1 and positions (postures) of the upper turning body 3 and the work device (the boom 8, the arm 9, and the bucket 10) relative to the lower traveling body 2 are detected by the position sensor 24, and a signal according to the detection result is transmitted to the vehicle body controller 20. By controlling the AC power to be output from the inverter 70 to the electric motor 60 based on these signals transmitted from the pressure sensor 54 and the position sensor 24, the vehicle body controller 20 controls a rotation number of the electric motor 60, adjusts the hydraulic pressure discharged from the hydraulic pump 50 to be a predetermined flow rate, and also adjusts volume of the hydraulic pump 50 of a variable capacity type. Besides that, various kinds of control for operating the hydraulic shovel 1 can be performed by the vehicle body controller 20.

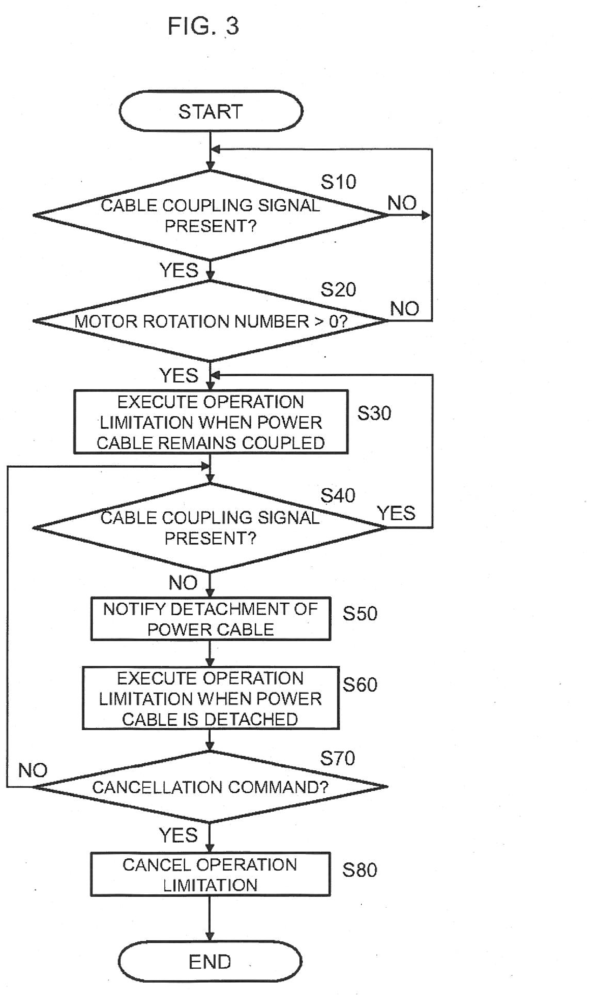

Between the power feeding port 90 and the power conversion device 80, a coupling detection device 91 is provided. When the power cable 92 is coupled to the power feeding port 90, the coupling detection device 91 detects that and transmits a predetermined cable coupling signal to the vehicle body controller 20 via the signal line 42. The vehicle body controller 20 performs operation limiting processing for limiting the operation of at least one of the lower traveling body 2, the turning mechanism 4, and the work device according to a coupling state of the power cable 92 based on presence/absence of the cable coupling signal transmitted from the coupling detection device 91. This will be described in detail below with reference to Figure 3.

Note that the coupling detection device 91 may mechanically and electrically detect coupling of the power cable 92 to the power feeding port 90 by a switch or the like, or may be provided as a function of the power conversion device 80 which detects that the external power source 100 is input to the power conversion device 80.

Figure 3 is a diagram illustrating a control flow of the operation limiting processing executed in the work machine according to one embodiment of the present invention. The control flow illustrated in Figure 3 is executed for each predetermined processing cycle in the vehicle body controller 20 for example.

In step S10, the vehicle body controller 20 determines the presence/absence of the cable coupling signal transmitted from the coupling detection device 91. If the cable coupling signal is transmitted from the coupling detection device 91, it is determined that the power cable 92 is coupled to the power feeding port 90 and the processing advances to step S20, and if the cable coupling signal is not transmitted from the coupling detection device 91, it is determined that the power cable 92 is not coupled to the power feeding port 90 and the processing remains in step S10.

In step S20, the vehicle body controller 20 determines whether or not the rotation number of the electric motor 60 is larger than zero based on a signal indicating a control state of the electric motor 60 transmitted from the inverter 70. If the rotation number of the electric motor 60 is larger than zero, it is determined that the hydraulic shovel 1 is being operated and the processing advances to step S30, and if the rotation number of the electric motor 60 is zero, it is determined that the hydraulic shovel 1 is in a non-operation state and the processing returns to step S10.

In step S30, the vehicle body controller 20 executes operation limitation when the power cable remains coupled. Here, according to limitation contents set beforehand, the operation of at least one of the lower traveling body 2, the turning mechanism 4, and the work device is limited. Here, a traveling speed of the lower traveling body 2 is limited to a predetermined speed or lower for example. Specifically, when the operator instructs the traveling operation by the lever operation of the operation device 21, a driving speed of the traveling motor 35 is suppressed and the traveling speed of the lower traveling body 2 is limited to the predetermined speed or lower. Such control can be achieved by changing a command for the rotation number of the electric motor 60 to the inverter 70 for example and limiting a flow rate of the hydraulic pressure supplied from the hydraulic pump 50 to the traveling motor 35 via the control valve unit 53 to be a predetermined value or lower. Thus, it is possible to prevent accidental detachment of the power cable 92 coupled to the power feeding port 90 due to the traveling operation of the lower traveling body 2.

Note that the operation limitation when the power cable remains coupled in step S30 is not limited to the contents described above. As long as the operation of at least one of the lower traveling body 2, the turning mechanism 4, and the work device is limited and it is effective for preventing detachment of the power cable 92 and securing safety during the work, the vehicle body controller 20 can execute the operation limitation when the power cable remains coupled with arbitrary contents in step S30.

In step S40, the vehicle body controller 20 determines the presence/absence of the cable coupling signal transmitted from the coupling detection device 91, similarly to step S10. If the cable coupling signal is transmitted from the coupling detection device 91, it is determined that the power cable 92 coupled to the power feeding port 90 is not detached, and the processing returns to step S30 to continue the operation limitation when the power cable remains coupled. On the other hand, if the cable coupling signal is not transmitted from the coupling detection device 91, it is determined that the power cable 92 is detached from the power feeding port 90 and therefore loss of coupling of the power cable 92 is detected by the coupling detection device 91, and the processing advances to step S50.

In step S50, the vehicle body controller 20 notifies the operator of the detachment of the power cable 92. Here, by displaying a predetermined notification screen on the monitor 22 installed in the cab 7 for example, the operator can recognize that the power cable 92 is detached from the power feeding port 90.

ln step S60, the vehicle body controller 20 executes the operation limitation when the power cable is detached. Here, according to the limitation contents set beforehand, the operation of at least one of the lower traveling body 2, the turning mechanism 4, and the work device is limited. Here, for example, the traveling operation of the lower traveling body 2 is inhibited or is limited to the predetermined speed or lower. Specifically, when the operator instructs the traveling operation by the lever operation of the operation device 21, drive of the traveling motor 35 is inhibited, or the driving speed is suppressed to limit the traveling speed of the lower traveling body 2 to the predetermined speed or lower. A speed limit at the time may be same as a speed limit in the operation limitation when the power cable remains coupled, that is executed in step S30, or may be different. Such control can be achieved by inhibiting or limiting output of the hydraulic pressure as an operation signal from the pilot pump 51 to the control valve unit 53 via the operation device 21 for example, or changing the command for the rotation number of the electric motor 60 to the inverter 70 and stopping the flow rate of the hydraulic pressure supplied from the hydraulic pump 50 to the traveling motor 35 via the control valve unit 53 or limiting it to be the predetermined value or lower. Thus, it is possible to prevent the power cable 92 detached from the power feeding port 90 from being accidentally stepped on by the lower traveling body 2.

Note that, in such operation limitation when the power cable is detached, the traveling operation of the lower traveling body 2 in either forward or reverse direction may be inhibited or limited. Specifically, since the power feeding port 90 is provided on a rear end portion of the upper turning body 2, an extending direction of the power cable can be estimated by a position (direction) of the upper turning body 2 so that the traveling operation in the extending direction of the power cable is inhibited or the traveling speed is limited to the predetermined speed or lower. Alternatively, based on a positional relation between the lower traveling body 2 and the external power source 100, the forward or reverse traveling operation in a direction of approaching the external power source 100 is inhibited or the traveling speed is limited to the predetermined speed or lower, while the traveling operation in a direction of separating from the external power source 100 is not limited. In this way, it is possible to effectively prevent the power cable 92 from being stepped on while securing workability of the hydraulic shovel 1 as much as possible.

Further, instead of or in addition to the traveling operation of the lower traveling body 2, a turning operation of the turning mechanism 4 may be inhibited or limited. Specifically, when the operator instructs the turning operation by the lever operation of the operation device 21, the drive of the turning motor 34 is inhibited, or the driving speed is suppressed to limit a turning speed of the upper turning body 3 to the predetermined speed or lower. Alternatively, based on a positional relation between the upper turning body 3 and the external power source 100, a turning range is limited to be within a predetermined range. Thus, it is possible to prevent the power cable 92 detached from the power feeding port 90 and a worker or the like present around the hydraulic shovel 1 from being caught in the upper turning body 3 or the work device due to the turning operation of the upper turning body 3.

Note that the operation limitation in step S60 when the power cable is detached is not limited to the contents described above. As long as the operation of at least one of the lower traveling body 2, the turning mechanism 4, and the work device is limited and it is effective for preventing a damage to the detached power cable 92 and securing the safety during the work, the vehicle body controller 20 can execute the operation limitation when the power cable is detached with arbitrary contents in step S60. The limitation contents at the time may be the same as the limitation contents in step S30 or may be different.

In step S70 the vehicle body controller 20 determines whether or not a predetermined cancellation command is input for notification of the detachment of the power cable 92 given to the operator in step S50. When the notification screen as described above is displayed on the monitor 22 for example in response to the detachment of the power cable 92, the operator confirms safety of surroundings or the like as needed, and then performs a predetermined canceling operation by operating the monitor 22 which is a touch panel or operating a non-illustrated operation switch installed in the cab 7 or the like. When the cancellation command is transmitted from the monitor 22 or the operation switch to the vehicle body controller 20 in response to the canceling operation, the vehicle body controller 20 determines that the cancellation command is input in step S70 and the processing advances to step S80. On the other hand, when the operator does not perform the canceling operation and the cancellation command is not input to the vehicle body controller 20, the processing returns to step S40 and the processing described above is repeated.

In step S80, the vehicle body controller 20 cancels the operation limitation when the power cable is detached. Here, the limitation to the operation of at least one of the lower traveling body 2, the turning mechanism 4, and the work device executed in step S60 is canceled, and the operation according to the operation of the operation device 21 is performed respectively in the traveling motor 35, the turning motor 34, the boom cylinder 31, the arm cylinder 32, and the bucket cylinder 33. Thus, when the operator determines that the safety is secured in the hydraulic shovel 1, decline of work efficiency due to the operation limitation is dissolved and efficient work can be executed.

When the processing of step S80 is executed, the control flow in Figure 3 is ended.

ln the control system 200 of the present embodiment, by executing operation control processing as described above in the vehicle body controller 20, a damage to the power cable 92 can be suppressed while securing the safety both in the case where the power cable 92 is coupled and in the case where the power cable 92 is detached.

According to the first embodiment of the present invention described above, following effects are accomplished.
(1) The hydraulic shovel 1 which is the work machine includes the lower traveling body 2, the upper turning body 3 coupled to the lower traveling body 2 via the turning mechanism 4 and provided to be capable of turning relative to the lower traveling body 2 by the turning mechanism 4, the work device (the boom 8, the arm 9, and the bucket 10) mounted on the upper turning body 3, an electric motor device (the electric motor 60) configured to generate the driving energy for operating the lower traveling body 2, the turning mechanism 4, and the work device respectively using the electric power, the power feeding port 90 to/from which the power cable 92 coupled to the external power source 100 is attachable and detachable, an electrical power storage device (the storage battery 40) that is rechargeable by using the electric power supplied from the external power source 100 via the power cable 92 coupled to the power feeding port 90 and is capable of discharging the electric power for use in generating the driving energy, and a controller (the vehicle body controller 20) configured to control the operations of the lower traveling body 2, the turning mechanism 4, and the work device. After the state where the power cable 92 is coupled to the power feeding port 90, when the loss of coupling of the power cable 92 is detected (step S40: NO), the vehicle body controller 20 limits the operation of at least one of the lower traveling body 2, the turning mechanism 4, and the work device (step S60). In this way, even when the power cable 92 that supplies the electric power from the external power source 100 which is a power source device to the hydraulic shovel 1 is detached from the hydraulic shovel 1, a damage to the power cable 92 can be sufficiently suppressed.
(2) In step S60, the vehicle body controller 20 inhibits the traveling operation of the lower traveling body 2 or limits the traveling speed to the predetermined speed or lower, for example. In this way, when the power cable 92 is detached from the power feeding port 90, it is possible to prevent the power cable 92 from being accidentally stepped on by the lower traveling body 2.
(3) In step S60, the vehicle body controller 20 may inhibit the traveling operation of the lower traveling body 2 in either forward or reverse direction or may limit the traveling speed to the predetermined speed or lower, for example. In this way, when the power cable 92 is detached from the power feeding port 90, it is possible to prevent the power cable 92 from being accidentally stepped on by the lower traveling body 2 while securing the workability of the hydraulic shovel 1 as much as possible.
(4) In addition, in step S60, the vehicle body controller 20 may inhibit the turning operation of the upper turning body 3 by the turning mechanism 4 or may limit the turning range to be within the predetermined range. In this way, when the power cable 92 is detached from the power feeding port 90, it is possible to prevent the power cable 92 and a worker or the like present around the hydraulic shovel 1 from being caught in the upper turning body 3 or the work device due to the turning operation.
(5) When the power cable 92 is in the state of being coupled to the power feeding port 90 (step S10: YES), the vehicle body controller 20 limits the operation of at least one of the lower traveling body 2, the turning mechanism 4, and the work device (step S30). In this way, it is possible to prevent accidental detachment of the power cable 92 coupled to the power feeding port 90.
(6) The vehicle body controller 20 may limit the operation of at least one of the lower traveling body 2, the turning mechanism 4, and the work device with the contents different from each other respectively in the operation limitation when the power cable remains coupled, that is executed in step S30 when the power cable 92 is in the state of being coupled to the power feeding port 90, and in the operation limitation when the power cable is detached, that is executed in step S60 when the loss of coupling of the power cable 92 is detected. In this way, the operation limitation can be performed with the appropriate contents according to respective situations when the power cable 92 is coupled and when it is detached.
(7) When the loss of coupling of the power cable 92 is detected (step S40: NO), the vehicle body controller 20 notifies the operator (step S50). In this way, when the power cable 92 is detached from the power feeding port 90, that is notified to call attention of the operator.
(8) The hydraulic shovel 1 includes the monitor 22 of a touch panel type for example, as an input device that receives an input operation by the operator. After notifying the operator in step S50, when the predetermined canceling operation is performed from the operator via the monitor 22 (step S70: YES), the vehicle body controller 20 cancels the limitation on the operation of at least one of the lower traveling body 2, the turning mechanism 4, and the work device (step S80). In this way, when the operator determines that the safety is secured in the hydraulic shovel 1, the decline of the work efficiency due to the operation limitation is dissolved and the efficient work can be executed.

### (Second Embodiment)

The present embodiment describes an example of controlling the operation of the hydraulic shovel 1 by a system configuration different from the control system 200 described in the first embodiment.

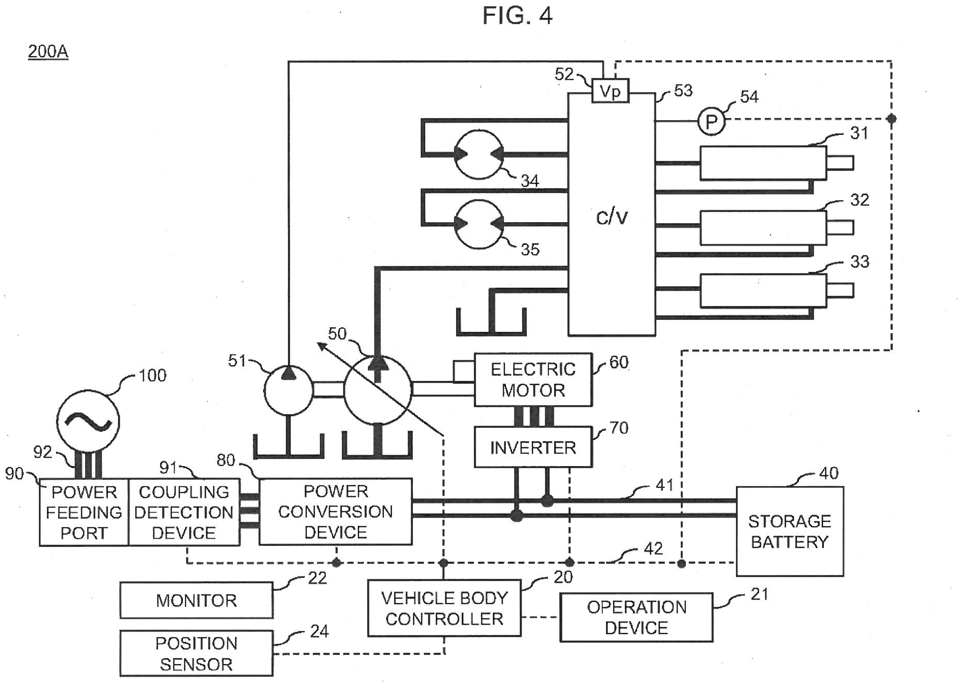

Figure 4 is a configuration diagram of the control system of the work machine according to the second embodiment of the present invention. A control system 200A illustrated in Figure 4 is different from the control system 200 in Figure 1 mainly in points that the operation device 21 is an electric operation device and transmits an operation signal according to the operation contents to the vehicle body controller 20, and the control valve unit 53 is provided with a solenoid pilot valve 52. The other points such as an outside appearance and the configuration of the hydraulic shovel 1, the other components of the control system 200A, and the contents of the operation limiting processing of each actuator executed according to a coupling state of the power cable 92 are the same as those described respectively in the first embodiment. Therefore, hereinafter, the operation control of the work machine of the present embodiment will be described with reference to the outside drawing in Figure 1 and the control flow in Figure 3 described respectively in the first embodiment, in addition to Figure 4.

In the present embodiment, the operation device 21 transmits the operation signal according to the operation contents of the operator to the vehicle body controller 20. The vehicle body controller 20 calculates an opening amount of the solenoid pilot valve 52 according to the operation of each actuator based on the operation signal transmitted from the operation device 21, and transmits an electric signal according to the calculation result to the solenoid pilot valve 52. Thus, the solenoid pilot valve 52 controls the hydraulic pressure supplied from the pilot pump 51 to the control valve unit 53 to control the control valve unit 50, the hydraulic pressure supplied from the hydraulic pump 50 to each actuator is controlled, and each actuator is operated.

ln addition, in the control flow in Figure 3, in the case of executing the operation limitation when the power cable remains coupled in step S30 and in the case of executing the operation limitation when the power cable is detached in step S60, the vehicle body controller 20 performs the operation limitation of each actuator by limiting the opening amount of the solenoid pilot valve 52. That is, according to the limitation contents set beforehand for each of the time when the power cable 92 is coupled and the time when it is detached, the opening amount of the solenoid pilot valve 52 when operating the pertinent actuator is limited compared to the case of not performing the operation limitation. Thus, the same operation limitation as that described in the first embodiment can be performed.

According to the second embodiment of the present invention described above, the same effects as those described in the first embodiment are accomplished.

### (Third Embodiment)

The present embodiment describes an example of controlling the operation of the hydraulic shovel 1 by a system configuration different from the control system 200 described in the first and second embodiments.

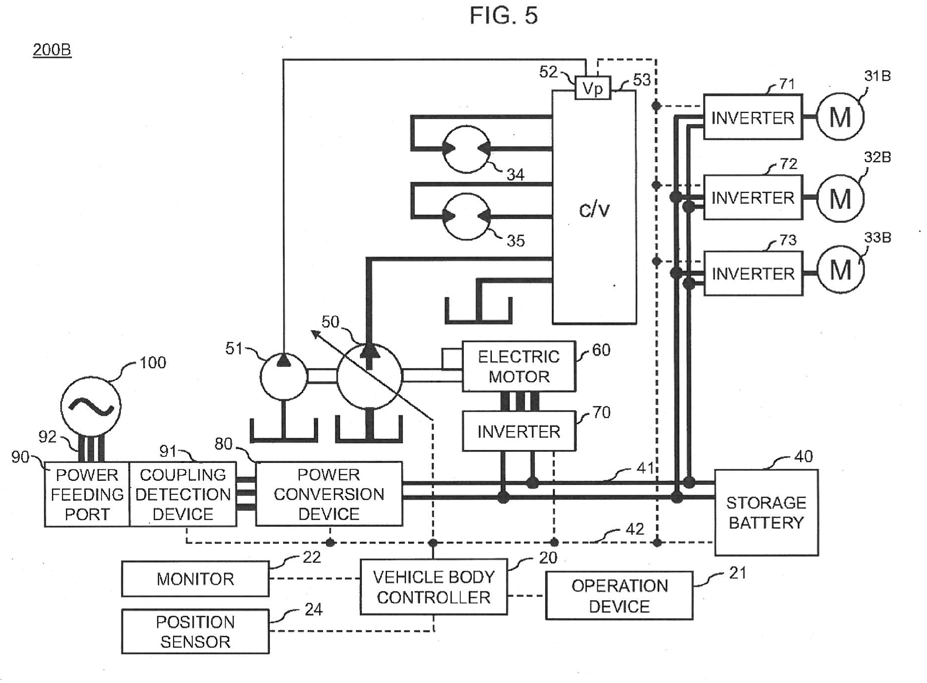

Figure 5 is a configuration diagram of the control system of the work machine according to the third embodiment of the present invention. A control system 200B illustrated in Figure 5 is different from the control system 200A in Figure 4 mainly in points that electric motors 31B, 32B, and 33B that are power sources for operating the boom 8, the arm 9, and the bucket 10 respectively are provided instead of the boom cylinder 31, the arm cylinder 32, and the bucket cylinder 33, and inverters 71, 72, and 73 are coupled to the electric motors 31B, 32B, and 33B respectively. The other points such as the outside appearance and the configuration of the hydraulic shovel 1, the other components of the control system 200B, and the contents of the operation limiting processing of each actuator executed according to the coupling state of the power cable 92 are the same as those described respectively in the first and second embodiments. Therefore, hereinafter, the operation control of the work machine of the present embodiment will be described with reference to the outside drawing in Figure 1 and the control flow in Figure 3 described respectively in the first embodiment, in addition to Figure 5.

In the present embodiment, the operation device 21 transmits the operation signal according to the operation contents of the operator to the vehicle body controller 20, similarly to the first embodiment. Based on the operation signal transmitted from the operation device 21, in the case of operating the lower traveling body 2 and the turning mechanism 4, the vehicle body controller 20 calculates the opening amount of the solenoid pilot valve 52 according to the operations, and transmits the electric signal according to the calculation result to the solenoid pilot valve 52. In addition, in the case of operating the work device, the rotation speeds of the electric motors 31B, 32B, and 33B according to the operations of the boom 8, the arm 9, and the bucket 10 are calculated, and rotation number commands according to the calculation results are transmitted to the inverters 71, 72, and 73. Thus, the hydraulic pressure supplied from the hydraulic pump 50 to the traveling motor 35 and the turning motor 34 via the control valve unit 53 is controlled, the drive of the electric motors 31B, 32B, and 33B is controlled, and each actuator is operated.

In addition, in the control flow in Figure 3, in the case of executing the operation limitation when the power cable remains coupled in step S30 and in the case of executing the operation limitation when the power cable is detached in step S60, the vehicle body controller 20 performs the operation limitation of each actuator by limiting the opening amount of the solenoid pilot valve 52 and the rotation speeds of the electric motors 31B, 32B, and 33B. That is, according to the limitation contents set beforehand for each of the time when the power cable 92 is coupled and the time when it is detached, the opening amount of the solenoid pilot valve 52 and the rotation speeds of the electric motors 31B, 32B, and 33B when operating the pertinent actuator are limited compared to the case of not performing the operation limitation. Thus, the same operation limitation as that described in the first embodiment can be performed.

According to the third embodiment of the present invention described above, the same effects as those described in the first embodiment are accomplished.

The embodiments of the present invention have been described above in detail, however, the present invention is not limited to the embodiments described above, and various design modifications are possible without deviating from the gist of the present invention described in the scope of claims. For example, the above embodiments have been described in detail for easy understanding of the present invention, and are not necessarily limited to the one having all the configurations described. In addition, a part of the configuration of an embodiment can be replaced with the configuration of another embodiment, and the configuration of another embodiment can be added to the configuration of an embodiment. Further, it is possible to add, delete, and replace other configurations for a part of the configuration of each embodiment.

### Reference Signs List

1: hydraulic shovel
2: lower traveling body
3: upper turning body
4: turning mechanism
5: crawler
7: cab
8: boom
9: arm
10: bucket
20: vehicle body controller
21: operation device
22: monitor
31: boom cylinder
32: arm cylinder
33: bucket cylinder
34: turning motor
35: traveling motor
40: storage battery
41: power line
42: signal line
50: hydraulic pump
51: pilot pump
52: solenoid pilot valve
53: control valve unit
54: pressure sensor
60: electric motor
70: inverter
80: power conversion device
90: power feeding port
91: coupling detection device
92: power supply cable
100: external power source
200: control system

## Claims

1. A work machine comprising:
a lower traveling body;
an upper turning body coupled to the lower traveling body via a turning mechanism and provided to be capable of turning relative to the lower traveling body by the turning mechanism;
a work device mounted on the upper turning body;
an electric motor device configured to generate driving energy for operating the lower traveling body, the turning mechanism, and the work device respectively using electric power;
a power feeding port to/from which a power cable coupled to an external power source is attachable and detachable;
an electrical power storage device that is rechargeable by using the electric power supplied from the external power source via the power cable coupled to the power feeding port and is capable of discharging the electric power for use in generating the driving energy; and
a controller configured to control operations of the lower traveling body, the turning mechanism, and the work device, the work machine further comprising
a coupling detection device configured to detect a coupling state of the power cable to the power feeding port, wherein
the controller limits the operation of at least one of the lower traveling body, the turning mechanism, and the work device when loss of coupling of the power cable is detected after coupling of the power cable to the power feeding port is detected by the coupling detection device.

2. The work machine according to claim 1, wherein
the controller inhibits a traveling operation of the lower traveling body or limits a traveling speed to a predetermined speed or lower when the loss of coupling of the power cable is detected by the coupling detection device.

3. The work machine according to claim 1, wherein
the controller inhibits a turning operation of the upper turning body by the turning mechanism or limits a turning range to be within a predetermined range when the loss of coupling of the power cable is detected by the coupling detection device.

4. The work machine according to claim 1, wherein
the controller limits the operation of at least one of the lower traveling body, the turning mechanism, and the work device when the power cable is in a state of being coupled to the power feeding port.

5. The work machine according to claim 4, wherein
the controller limits the operation of at least one of the lower traveling body, the turning mechanism, and the work device with contents different from each other respectively when the power cable is in the state of being coupled to the power feeding port and when the loss of coupling of the power cable is detected.
